Europäisches Patentamt

European Patent Office

Office européen des brevets

(11) Publication number: **0 336 234**
**A2**

(12) **EUROPEAN PATENT APPLICATION**

(21) Application number: 89105237.5

(51) Int. Cl.⁴: **D21C 7/12** , **G01N 1/10**

(22) Date of filing: **23.03.89**

(30) Priority: **04.04.88 US 176977**

(43) Date of publication of application:
**11.10.89 Bulletin 89/41**

(84) Designated Contracting States:
**SE**

(71) Applicant: **AFORA OY**
**Hiomotie 5**
**SF-00380 Helsinki(FI)**

(72) Inventor: **Tikka, Panu**
**Lumimaarantae**
**SF-10B Espoo 2140(FI)**

(74) Representative: **Gross, Gernot K.**
**Kleiberweg 5**
**D-6200 Wiesbaden(DE)**

(54) **Apparatus for continually sampling liquor from a pulp digester.**

(57) Apparatus for continually sampling pulping process liquor taken from a digester (3) including an inlet valve (6) into a sample supply line (12) through a filter (26). A sampling branch line (14) is connected to the sample supply line (12) and means (38) are provided for pressurizing the sample. A sample is extracted from the sampling branch line (14) by an extraction means (24). Means (30, 18) are provided for flushing the sample lines.

FIG. 1

# APPARATUS FOR CONTINUALLY SAMPLING LIQUOR FROM A PULP DIGESTER

## BACKGROUND OF THE INVENTION

### 1. Technical Field

The present invention relates generally to process automation within the pulp and paper industry and more particularly to systems for controlling pulping processes in response to information derived from samples of liquor taken from a digester (hereinafter, "process liquor"). Specifically, this invention pertains to apparatus for use in continually extracting such samples.

### 2. Related Art

In the manufacture of pulp from wood chips, the pulping process is monitored at various stages to ensure that certain process variables which affect product quality are within desired operating parameters. Examples of such process variables are the lignin, active alkali, and dry solids contents of the process liquor. Attempts have been made to achieve real-time control of pulping processes by providing closed-loop process control systems. In a typical system, samples of process liquor are extracted from the digester and delivered to a measurement subsystem from which information pertaining to the relevant process variables is obtained. A system of this type is described in U.S. Patent No. 4,540,468 of Genco et al.

The physical characteristics of the process liquor are such that systems of the type generally described above become clogged throughout. This results in significant downtime for cleaning, during which time the user may be deprived of the advantages which these systems are designed to provide. Moreover, the samples delivered to the measurement subsystem may become contaminated, thus adversely affecting the accuracy of the information obtained.

Accordingly, an object of this invention is to provide apparatus for use in continually sampling process liquor taken from a digester.

Another object of the invention is to provide such apparatus that enable sampling over an extended period of time without the need to shut down for cleaning.

A further object of the invention is to provide, over an extended number of sampling cycles, a uniform volume of process liquor samples for delivery to a measurement subsystem.

## SUMMARY OF THE INVENTION

This invention provides apparatus for use in continually sampling process liquor taken from a digester. The apparatus can be considered a sampling subsystem which is adapted to interface with a digester, a measurement subsystem, a source of carrier liquid, a computer, and at least one source of flushing medium in an overall process control system for the digester.

In its preferred use, the apparatus is operated such that intermittent, two-phase flushing cycles occur between intermittent sampling cycles in order to prevent buildup of residual liquor -- particularly within the sample extraction means -- and thereby continually provide uncontaminated samples of uniform volume for delivery to the measurement subsystem.

The apparatus comprises conduit for process liquor including a supply branch which at least partially defines a first flow path, and a sampling branch which at least partially defines a second flow path and is in fluid communication with the supply branch; first valve means connected to one or more entrance terminals of the supply branch for alternately enabling or disabling flow past the entrance terminals; second valve means connected to an exit terminal of the supply branch for alternately enabling or disabling flow past the exit terminal; filtering means connected to the process liquor conduit for filtering process liquor that flows from the supply branch into the sampling branch; sample extraction means connected to the sampling branch for transferring a small volume of process liquor from the second flow path to a third flow path; and third valve means connected to the process liquor conduit for alternately enabling or disabling flow of a flushing medium into the sampling branch.

The process liquor conduit may further comprise a pressurization branch connected to the supply branch, and means in fluid communication with the pressurization branch for flushing the supply branch and urging process liquor through the sample extraction means.

The apparatus may further comprise conduit for a carrier liquid, said conduit cooperating with the sample extraction means to provide the third flow path.

## BRIEF DESCRIPTION OF THE DRAWINGS

Fig. 1 is a schematic illustration of the preferred embodiment of the invention, depicting its use in conjunction with a closed-loop control system for a pulping process.

Fig. 2 is a schematic illustration of a further embodiment of the invention.

DESCRIPTION OF THE PREFERRED EMBODIMENT

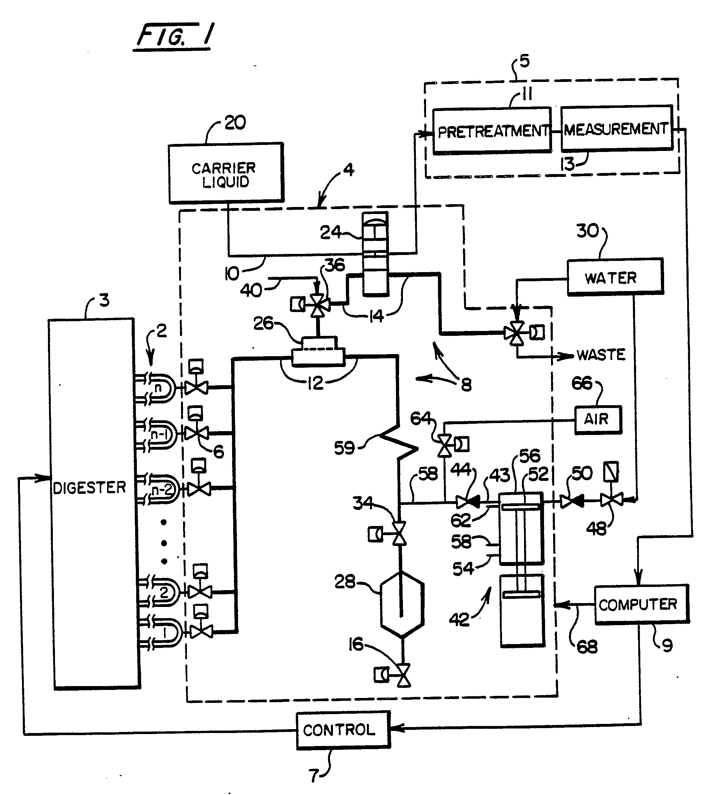

In Fig. 1, the numeral 2 indicates a number 1,2, .... n, of sample by-pass loops which are connected to pipelines associated with a pulping process. The by-pass loops 2 are typically connected across pumps which circulate process liquor taken from one or more stages of a digester 3.

The dashed line 4 designates apparatus for use in continually sampling process liquor taken from one or more by-pass loops 2 in accordance with the preferred embodiment. The apparatus 4 may be considered a sampling subsystem of an overall process control system which also comprises a measurement subsystem 5 and appropriate control apparatus 7, all in communication with a computer 9. The measurement subsystem 5 typically comprises conventional sample pretreatment means 11 and conventional measurement apparatus 13.

Operation of the apparatus 4 is independent on the particular by-pass loop from which a sample of process liquor is taken. Accordingly, the apparatus 4 will be described in terms of samples taken through a first valve 6 (hereinafter, the "entrance" valve) connected to the by-pass loop numbered "n-1". A recommended valve for this application is the stainless steel ball valve No. SS-62 TF4 which is available from Whitey Co.

The apparatus 4 comprises conduit 8 for process liquor (indicated by bold lines and hereinafter referred to as "liquor conduit") and may further comprise conduit 10 for a carrier liquid (hereinafter referred to as "carrier-conduit"). The liquor conduit 8 includes two branches designated herein as a supply branch 12 and a sampling branch 14. For any particular sampling cycle, the supply branch 12 can be considered as having an entrance terminal connected to the entrance valve 6. The entrance valve 6 alternately enables or disables flow past the entrance terminal. In addition, the supply branch 12 has an exit terminal connected to a second valve 16 which alternately enables or disables flow past the exit terminal and out from the liquor conduit. (A recommended valve for valve 16 is ball valve No. SS-62 TS which is available from Whitey Co. The valve 16 will hereinafter be referred to as the "exit" valve.) Accordingly, the supply branch 12 partially defines a first flow path extending from the entrance valve 6 to the exit valve 16. The sampling branch 14 partially defines a second flow path extending from the supply branch 12 through sample extraction means 24 and, in the embodiment of Fig. 1, to a third valve 18. The carrier conduit 10 partially defines a third flow path extending from a source of carrier liquid 20 to the measurement subsystem 5, and in the preferred embodiment cooperates with the sample extraction means 24 to provide the third flow path. It is said that these conduits "partially" define their respective flow paths because various elements of the invention such as the filter 26, the third valve 18, and the sample extraction means 24 appear in one or more of the flow paths between segments of the respective conduits; and in various embodiments of the invention, elements such as the filter 26 and the third valve 18 could be installed in various flow paths. All conduit is preferably stainless steel. The liquid conduit 8 has an inside diameter of about six millimeters for the supply branch 12 and of about 1 millimeter for the sampling branch 14. The third valve 18 is preferably a three-way ball valve such as Valve No. SS-62 TS which is available from Whitey Co., and is provided primarily to alternately enable or disable the flow of a flushing medium from a source 30 into the sampling branch 14.

The sample extraction means 24 is connected to the sampling branch 14 and the carrier conduit 10. As suggested above, the purpose of the sample extraction means 24 is to extract a sample (typically on the order of about 25 microliters) of process liquor from the second flow path and transfer the sample to the third flow path. In operation, this small sample is then carried to the sample pretreatment means 22 by flow of the carrier liquid through the extraction means. The extraction means 24 may be, for example, a two-position valve having a rotatable or linearly slidable internal mechanism and two pairs of inlet/outlet ports. In the preferred embodiment, the sample extraction means 24 is Injection Valve No. 3527330-121 XXX which is available from the Process Analytics Division of Combustion Engineering, Inc. During different operational steps of the apparatus 4, the sample extraction means 24 alternately blocks passage along the second flow path while permitting passage along the third flow path or blocks passage along the third flow path while permitting passage along the second flow path, depending on the positional mode of its internal mechanism.

The process liquor typically contains materials that are extraneous for measurement purposes and may clog or contaminate the measurement subsystem 5. Moreover, these materials may inhibit flow and necessitate shutdown of the entire apparatus 4 for cleaning if permitted to accumulate over a succession of sampling cycles. Accordingly, a filter 26 is provided to filter these materials from process liquor which flows from the supply branch 12 through the sampling branch 14 and into the extraction means 24. The material trapped by the filter 26 is flushed out of the apparatus 4 between sampling cycles as is further described below. Preferably, the filter 26 is a by-pass filter forming a junction between the supply branch 12 and the sampling branch 14. This permits use of a larger inside diameter for the supply branch 12, which in turn facilitates flushing of the trapped material. A stainless steel by-pass filter suitable for use with the apparatus 4 is available from AFORA Oy of Helsinki, Finland.

Operation of the apparatus 4 may be generally described as a succession of intermittent sampling cycles between which a corresponding succession of flushing cycles occurs. The flushing cycle clears a substantial portion of the apparatus 4 of process liquor after the extraction means 24 has transferred the small volume of process liquor to the third flow path and returned to a positional mode in which flow is blocked along the third flow path but permitted along the second flow path. The flushing cycle is important for at least three reasons. First, by flushing the apparatus 4 between sampling cycles, the samples transferred by the extraction means 24 are substantially uncontaminated by process liquor which entered the apparatus 4 during the previous sampling cycle. This ensures that measurement data derived from each sample reflect current operating conditions in the digester. Second, because of the physical characteristics of the process liquor, conventional sampling systems become clogged and/or contaminated over a succession of sampling cycles. This necessitates frequent shutdown for cleaning. Third, if the sampling branch 14 is not repeatedly flushed, the gradual buildup of liquor in the internal mechanism of the extraction means 24 tends to decrease the volume of sample transferred to the third flow path, thus presenting a source of error in measurement. These problems are significantly ameliorated by providing apparatus adapted to operate with alternating sampling and flushing cycles.

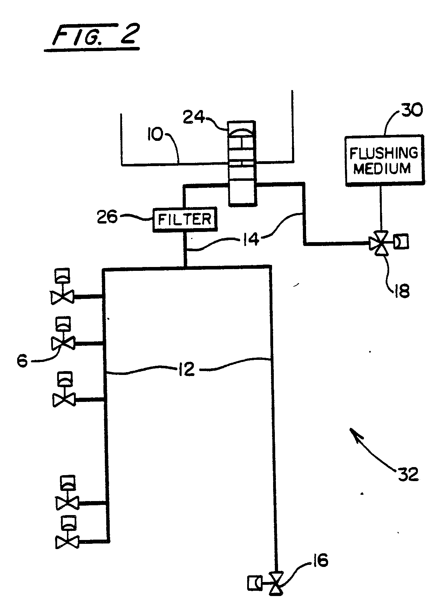

Referring now to Fig. 2 which illustrates one embodiment of the invention as subsystem 32, it can be seen that the supply branch 12 terminates by connection to the exit valve 16 which is closed during the sampling cycle and which permits escape of excess process liquor and a flushing medium during the flushing cycle. During the flushing cycle, the flushing medium (typically, water) flows from a source 30 to the supply branch 12, thus passing through the third valve 18, the extraction means 24, and the filter 26. Material trapped by the filter 26 during the previous sampling cycle is flushed into the supply branch 12 and, subsequently, out of the subsystem 32 through the exit valve 16. However, after each flushing cycle process liquor remains in the supply branch 12 since the portion of the said branch between the sampling branch 14 and the entrance valve 6 is not in the flow path of the flushing medium. In addition, residual traces of the flushing medium may remain in both the supply branch 12 and the sampling branch 14. This residue is yet another source of error in the measurements corresponding to the next succeeding sampling cycle. Therefore, it is desirable to remove as much of this residue as possible before the small volume of process liquor is transferred by the extraction means 24 during the next sampling cycle.

Thus, referring again to the preferred embodiment of Fig. 1, the apparatus 4 includes process liquor accumulation means for receiving excess process liquor that flows from the entrance valve 6 through the supply branch 12 and carries the residual flushing medium in addition to process liquor remaining from previous sampling cycles. A suitable liquor accumulation means is a sample vessel 28 (also available from Whitey Co.). The sample vessel 28 has an internal volume of about three times the internal volume of the supply branch 12, and is connected to the supply branch near the exit valve 16.

The apparatus 4 further includes first and second shut-off valves 34,36. The first shut-off valve 34 is connected to the supply branch 12 between the sample vessel 28 and the sampling branch 14 and alternately enables or disables flow into the sample vessel. The second shut-off valve 36 is connected to the sampling branch 14 between the filter 26 and the extraction means 24 and alternately enables or disables flow between the filter 26 and the extraction means. The first shut-off valve 34 may be of the same type as the exit valve 16. The second shut-off valve 36 is preferably a three-way valve such as valve 18 so that samples of process liquor may be manually entered therethrough (as indicated by line 40) when desired.

The liquor conduit 8 in Fig. 1 further includes a pressurization branch 38 connected to the supply branch 12 between the first shut-off valve 34 and the filter 26. The pressurization branch 38 connects the supply branch 12 to a first one-way valve 44. The first one-way valve 44 is connected to a pump 42 via hydraulic fluid conduit 43. Thus, the pump 42 is in one-way fluid communication with the supply branch 12. In operation, the pump 42 receives a hydraulic fluid (typically, water) from a source 46 through a magnetic valve 48 and a second one-way valve 50. A suitable one-way valve for valves 48 and 50 is Valve No. SS-6C-MM-1 which is available from Nupro Co. A suitable valve for valve 48 is Valve No. MA-292-010 which is available from Staiger of West Germany. The purpose of the pump 42 is to force process liquor along the sampling branch 14 and into and through the extraction means 24 during the sampling cycle, and to force process liquor along the supply branch 12, through the entrance valve 6, and back into the by-pass loop "n-1" during the first phase of a two-phase flushing cycle. Any conventional means suitable for accomplishing these functions as further described below may be used in accordance with the present invention. In the preferred embodiment, the pump 42 is a pneumatically- actuated, three-position piston pump that is available from AFORA Oy.

In operating the apparatus 4, the sampling cycle is preceded by the following conditions. The first shut-off valve 34 is open. Valves 6, 36, 16 and 48 are closed. The sample vessel 28 is substantially empty. The piston 52 in the pump 42 is in the full-down position (indicated as 54) and the cylinder 56 is substantially full of water. The hydraulic fluid conduit 43 is filled with water between the one-way valves 44,50. The internal mechanism of the extraction means 24 is in the positional mode wherein flow is permitted along the second flow path corresponding to the sampling branch 14. The sampling cycle begins by actuating the entrance valve 6 to the open position. This permits process liquor to flow into and fill the supply branch 12, the filter 26, the pressurization branch 38, and most of the sample vessel 28. As the process liquor flows into the sample vessel 28, it carries residue remaining from the previous flushing cycle. The entrance valve 6 and the first shut-off valve 34 are then actuated to the closed position. The second shut-off valve 36 is actuated to the open position. The pump 42 is then actuated to drive the piston 52 up to a first position (indicated as 58). As the piston 52 moves to the first position 58, the resulting increase in hydraulic pressure forces process liquor through the filter 26, along the sampling branch 14, and through the extraction means 24. Thus, the internal volume of the cylinder 56 corresponding to the displacement of the piston 52 is substantially equal to the volume of process liquor flowing through the filter 26.

As the process liquor flows through the extraction means 24, it carries the residual flushing medium that remained in the sampling branch 14 after the previous flushing cycle. During movement of the piston 52, a volume of process liquor sufficient to carry this residue through the extraction means 24 is permitted to flow along the sampling branch 14, and any excess liquor flows out of system 4 through the third valve 18. To ensure that no water from the cylinder 56 reaches the extraction means 24 during the aforesaid movement of the piston 52, the supply branch 12 includes a dead volume coil 59 between the pressurization branch 38 and the sampling branch 14.

Prior to the arrival of the piston 52 at the first position 58 (i.e., while the internal mechanism of the extraction means is still flooded), the extraction means 24 is actuated to position its internal mechanism so that flow is permitted along the third flow path corresponding to the carrier conduit 10. Accordingly, the small sample volume of process liquor contained in the internal mechanism of the extraction means 24 is transferred from the second flow path to the third flow path where it is immediately carried by flow of the carrier liquid to the measurement subsystem 5. After the extraction means 24 is actuated as described above, the second shut-off valve 36 is actuated to the closed position. Then, in the first phase of the flushing cycle, the entrance valve 6 is actuated to the open position and the pump 42 is actuated to move the piston 52 up to a second position (indicated as 62).

As the piston 52 moves to the second position 62, the resulting increase in hydraulic pressure forces process liquor in the supply branch 12 through the entrance valve 6 and back into the by-pass loop "n-1". The flow of water from the cylinder 56 through the entrance valve 6 flushes that portion of the supply branch 12 extending from the pressurization branch 38 to the entrance valve. Thus, the internal volume of the cylinder 56 corresponding to displacement of the piston 52 from the first position 58 to the second position 62 should be at least as great as the volume of the supply branch 12.

When the piston 52 reaches the second position 62, the entrance valve 6 is actuated to the closed position. The pump 42 is then actuated to move the piston 52 to the full-down position 54. The magnetic valve 48 is then actuated to the open position, thus filling the cylinder 56 and the hydraulic fluid conduit 43 with water. The magnetic valve 48 is closed and the exit valve 16 is actuated to the open position in order to drain the sample vessel 28. The first and second shut-off valves 34,36 are then actuated to the open position, and the extraction means 24 is actuated to position its internal mechanism so that flow is permitted along the second flow path.

The second phase of the flushing cycle begins by actuating the third valve 18 to permit flow of the flushing medium from the source 30 through the sampling branch 14, and out of the system 4 via the exit valve 16. This cleans valve 36 and the extraction means 24, back-flushes the filter 26, and flushes the filtered material out of the apparatus 4. The third valve 18 and the second shut-off valve 36 are then actuated to the closed position.

If too much residue remains in the sample vessel 28, the apparatus 4 may further incorporate a valve 64 connected between the pressurization branch 38 and a source of pressurized air 66. By actuating the valve 64 to the open position, the residue is blown out of the sample vessel 28 through the exit valve 16.

Valves 64 and 16 are then actuated to the closed position, thus restoring the conditions preceding the sampling cycle.

Actuation of the pump 42 and all valves in the indicated sequence is typically controlled by signals 68 delivered in response to program instructions entered into the computer 9.

Having described the preferred embodiment, it should be understood that the description is not intended to restrict the scope of the invention beyond that defined by the following claims and their equivalents.

## Claims

1. Apparatus for use in continually sampling pulping process liquor taken from a digester, comprising:
conduit for process liquor, said conduit including a supply branch 12 which at least partially defines a first process liquor flow path and a sampling branch 14 which at least partially defines a second process liquor flow path, the supply branch 12 having an exit terminal 16 and at least one process liquor entrance terminal 6, and the sampling branch being connected to the supply branch 14 between the exit terminal and all entrance terminals;
first valve means 6 connected to an entrance terminal for alternately enabling or disabling flow past the entrance terminal;
second valve means 16 connected to the exit terminal for alternately enabling or disabling flow past the exit terminal and out from the process liquor conduit;
sample extraction means 24 connected to the sampling branch 14 for transferring a small volume of process liquor from the second flow path 14 to a third flow path 10,11;
filtering means 26 connected to the conduit for filtering process liquor that flows from the first flow path 12 to the second flow path 14 and into the sample extraction means 24; and
third valve means 18 connected to the conduit for alternately enabling or disabling flow of a flushing medium into the sampling branch 14.

2. Apparatus as in claim 1 wherein the filtering means 26 is connected to the sampling branch 14.

3. Apparatus as in claim 2 wherein the third valve means is connected to the sampling branch and wherein the sample extraction means is connected to the sampling branch between the filtering means and the third valve means.

4. Apparatus as in claim 3 further comprising conduit for a carrier liquid, said conduit cooperating with the sample extraction means to provide the third flow path.

5. Apparatus as in claim 1 further comprising liquor accumulation means, connected to the supply branch between the sampling branch and the second valve means, for receiving excess process liquor that flows from the first valve means along the first flow path and past the sampling branch.

6. Apparatus as in claim 5 further comprising fourth valve means, connected to the supply branch between the sampling branch and the liquor accumulation means, for alternately enabling or disabling flow into the liquor accumulation means.

7. Apparatus as in claim 6 wherein the conduit further comprises a pressurization branch connected to the supply branch and wherein the apparatus further comprises a pump in fluid communication with the pressurization branch.

8. Apparatus as in claim 7 wherein the pressurization branch is connected to the supply branch between the sampling branch and the fourth valve means.

9. Apparatus as in claim 8 further comprising sixth valve means connected to the pressurization branch for permitting only one-way flow from the pump to the supply branch.

10. Apparatus as in claim 9 wherein the filtering means is connected to the sampling branch.

11. Apparatus as in claim 10 further comprising seventh valve means, connected to the sampling branch between the filtering means and the sample extraction means, for alternately enabling or disabling flow between the filtering means and the sample extraction means.

12. Apparatus as in claim 11 wherein the pump is a piston-type pump.

13. Apparatus as in claim 11 wherein the third valve means is connected to the sampling branch and the sample extraction means is connected to the sampling branch between the filtering means and the third valve means.

14. Apparatus as in claim 13 wherein the sampling branch is connected to the supply branch through the filtering means, the filtering means forming a junction between the two branches.

15. Apparatus as in claim 13 wherein the sample extraction means comprises a valve.

16. Apparatus as in claim 1 further comprising conduit for a carrier liquid, said conduit cooperating with the sample extraction means to provide the third flow path.

17. Apparatus as in claim 16 further comprising liquor accumulation means, connected to the supply branch between the sampling branch and the second valve means, for receiving excess process liquor that flows toward the second valve means during a sampling cycle.

18. Apparatus as in claim 17 is further comprising fourth valve means, connected to the supply branch between the sampling branch and the liquor accumulation means, for alternately enabling or disabling flow into the liquor accumulation means.

19. Apparatus as in claim 18 wherein the conduit for process liquor further comprises a pressurization branch connected to the supply branch and wherein the apparatus further comprises a pump in fluid communication with the pressurization branch.

20. Apparatus as in claim 19 wherein the pressurization branch is connected to the supply branch between the sampling branch and the fourth valve means.

21. Apparatus as in claim 20 further comprising sixth valve means connected to the pressurization branch for permitting flow from the pump to the supply branch and blocking flow from the supply branch to the pump.

22. Apparatus as in claim 21 wherein the filtering means is connected to the sampling branch.

23. Apparatus as in claim 22 further comprising seventh valve means, connected to the sampling branch between the filtering means and the sample extraction means, for alternately enabling or disabling flow between the filtering means and the sample extraction means.

24. Apparatus as in claim 23 wherein the third valve means is connected to the sampling branch and the sample extraction means is connected to the sampling branch between the filtering means and the third valve means.

25. Apparatus for continually sampling pulping process liquor taken from a digester, comprising:
conduit for the process liquor including a supply branch which at least partially defines a first flow path and a sampling branch which at least partially defines a second flow path, the supply branch having an exit terminal and at least one entrance terminal;
filtering means connecting the supply branch to the sampling branch for filtering process liquor that flows from the first flow path to the second flow path;
first valve means connected to an entrance terminal for alternately enabling or disabling flow past the entrance terminal;
second valve means connected to the supply branch for alternately enabling or disabling flow out past the exit terminal;
third valve means connected to the conduit for alternately enabling or disabling flow of a flushing medium into the conduit; and
sample extraction means connected to the sampling branch for transferring a small volume of process liquor from the second flow path to a third flow path.

26. Apparatus as in claim 25 wherein the third valve means is connected to the sampling branch and the sample extraction means is connected to the sampling branch between the filtering means and the third valve means.

27. Apparatus as in claim 26 wherein the sample extraction means comprises a valve.

28. Apparatus as in claim 26 further comprising liquor accumulation means, connected to the supply branch between the filtering means and the second valve means, for receiving excess process liquor that flows from the first valve means past the filtering means and along the first flow path.

29. Apparatus as in claim 28 further comprising fourth valve means, connected to the supply branch between the filtering means and the liquor accumulation means, for alternately enabling or disabling flow into the liquor accumulation means.

30. Apparatus as in claim 29 wherein the conduit further comprises a pressurization branch connected to the supply branch and wherein the apparatus further comprises a pump in one-way fluid communication with the pressurization branch.

31. Apparatus as in claim 30 wherein the pressurization branch is connected to the supply branch between the sampling branch and the fourth valve means.

32. Apparatus as in claim 31 further comprising sixth valve means connected to the pressurization branch for permitting flow from the pump to the supply branch and for blocking flow from the supply branch to the pump.

33. Apparatus as in claim 32 further comprising seventh valve means, connected to the sampling branch between the filtering means and the sample extraction means, for alternately enabling or disabling flow between the filtering means and the sample extraction means.

34. Apparatus as in claim 33 wherein the sample extraction means comprises a valve.

FIG. 1

*FIG. 2*